# EUROPEAN PATENT SPECIFICATION

(11) **EP 4 057 727 B1**
(45) Date of publication and mention of the grant of the patent: **04.09.2024**
(21) Application number: 19951411.8
(22) Date of filing: 08.11.2019
(51) Int. Cl.: H04B 1/3827, H04W 72/12

(54) **METHOD AND DEVICE FOR INFORMATION PROCESSING**
VERFAHREN UND VORRICHTUNG ZUR INFORMATIONSVERARBEITUNG
PROCÉDÉ ET DISPOSITIF DE TRAITEMENT D'INFORMATIONS

(43) Date of publication of application: 14.09.2022
(73) Proprietor: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Penza, Giancarlo
(86) International application number: PCT/CN2019/116850
(87) International publication number: WO 2021/088052

(56) References cited:
- WO-A1-2019/201312
- CN-A- 110 351 054
- US-A1- 2012 082 070
- OPPO: "Discussion on NSA FDD-TDD HPUE SAR solutions", vol. RAN WG4, no. Xi'an, China; 20190408 - 20190412, 1 April 2019 (2019-04-01), XP051713517, Retrieved from the Internet <URL:http://www.3gpp.org/ftp/tsg%5Fran/WG4%5FRadio/TSGR4%5F90Bis/Docs/R4%2D1903055%2Ezip> [retrieved on 20190401]
- HUAWEI ET AL: "On SAR solutions for FDD+TDD HPUE", vol. RAN WG4, no. Chongqing, China; 20191014 - 20191018, 4 October 2019 (2019-10-04), XP051794709, Retrieved from the Internet <URL:http://www.3gpp.org/ftp/tsg_ran/WG4_Radio/TSGR4_92Bis/Docs/R4-1912520.zip> [retrieved on 20191004]
- OPPO: "About MPE enhancements", vol. RAN WG4, no. Chongqing, China; 20191014 - 20191018, 13 October 2019 (2019-10-13), XP051787064, Retrieved from the Internet <URL:http://www.3gpp.org/ftp/Meetings_3GPP_SYNC/RAN4/Docs/R4-1910737.zip> [retrieved on 20191013]
- OPPO: "Discussion on NSA FDD-TDD HPUE SAR Solutions", 3GPP TSG-RAN WG4 MEETING #90BIS, R4-1903055, 1 April 2019 (2019-04-01), XP051713517
- HUAWEI ET AL.: "On SAR solutions for FDD+TDD HPUE", 3GPP TSG-RAN WG4 MEETING #92BIS, R4-1912520, 5 October 2019 (2019-10-05), XP051794709

## Description

### Technical Field

Embodiments of the present application relate to electronic technology, and relate to but are not limited to a method and device for information processing.

### Background

In a frequency band below 6GHz, Specific Absorption Rate (SAR) is an index parameter for measuring the electromagnetic radiation intensity of the terminal to the human body. In order to avoid harm of electromagnetic radiation devices such as mobile phones to the human body, there are standards with strict requirements for the SAR value radiated by mobile phones, and the terminal should not exceed this limit. The SAR index is the average measured value of the terminal in a certain period of time. The higher the terminal transmission power, the higher the SAR value; or, the longer the uplink transmission time, the higher the SAR value.

In a frequency band above 6GHz, the Maximum Permissible Emission (MPE) is an index parameter for measuring the electromagnetic radiation intensity of the terminal to human body. In order to avoid harm of electromagnetic radiation devices such as mobile phones to the human body, there are standards with strict requirements for the MPE value radiated by mobile phones, and the terminal should not exceed this limit. The MPE index is the average measured value of the power density of the terminal in a certain area within a certain period of time. The higher the terminal transmission power, the higher the MPE value.

In order to meet SAR and MPE target indexes, a terminal often uses, for example, a range sensor to detect a distance between the terminal and a human body and performs power back-off to reduce the transmission power when the terminal gets close to the human body, so as to avoid the problem of SAR and MPE limit-exceeding.

However, although the problem of SAR and MPE limit-exceeding is solved effectively by this method, it also comes with serious power loss.

Related technologies are known from R4-1903055 and R4-1912520.

### Summary

The invention is set out in the appended set of claims. In view of this, embodiments of the present application provide a method and device for information processing. It should be noted that embodiments of the invention are those whose scope is within that of the appended claims, and the implementations disclosed in this disclosure which do not fall under the scope of the appended claims are to be considered as examples for illustration.

### Brief Description of Drawings

FIG. 1 is a schematic diagram of a structure of communication architecture according to an embodiment of the present application.
FIG. 2 is a schematic flowchart of an implementation of a method for information processing according to an embodiment of the present application.
FIG. 3 is a schematic flowchart of another implementation of a method for information processing according to an embodiment of the present application.
FIG. 4 is a schematic flowchart of yet another implementation of a method for information processing according to an embodiment of the present application.
FIG. 5 is a schematic diagram of a time window according to an embodiment of the present application.
FIG. 6A is a schematic diagram of a structure of a terminal device according to an embodiment of the present application.
FIG. 6B is a schematic diagram of a structure of another terminal device according to an embodiment of the present application.
FIG. 7A is a schematic diagram of a structure of a network device according to an embodiment of the present application.
FIG. 7B is a schematic diagram of a structure of another network device according to an embodiment of the present application.
FIG. 8 is a schematic diagram of a structure of a communication device according to an embodiment of the present application.
FIG. 9 is a schematic diagram of a structure of a chip according to an embodiment of the present application.
FIG. 10 is a schematic block diagram of a communication system according to an embodiment of the present application.

### Detailed Description

In order to make objects, technical solutions, and advantages of embodiments of the present application clearer, specific technical solutions of the present application will be described in further detail below with reference to accompanying drawings in the embodiments of the present application. Following embodiments are intended to illustrate the present application, but are not intended to limit the scope of the present application.

Unless otherwise defined, all technical and scientific terms used herein have same meanings as those commonly understood by those skilled in the technical field of the present application. Terms used herein are only for the purpose of describing the embodiments of the present application, but are not intended to limit the present application.

"Some embodiments" revolved in following description describe a subset of all possible embodiments, but it can be understood that "some embodiments" can be a same subset or different subsets of all possible embodiments, and can be combined with each other without conflict.

It should be pointed out that the terms "first/second/third" in the embodiments of the present application are only for distinguishing similar objects, but do not represent a specific order for objects. Understandably, the "first/second/third" can be interchanged in a specific order or a sequence if allowed, so that the embodiments of the present application described here can be implemented in an order other than that illustrated or described here.

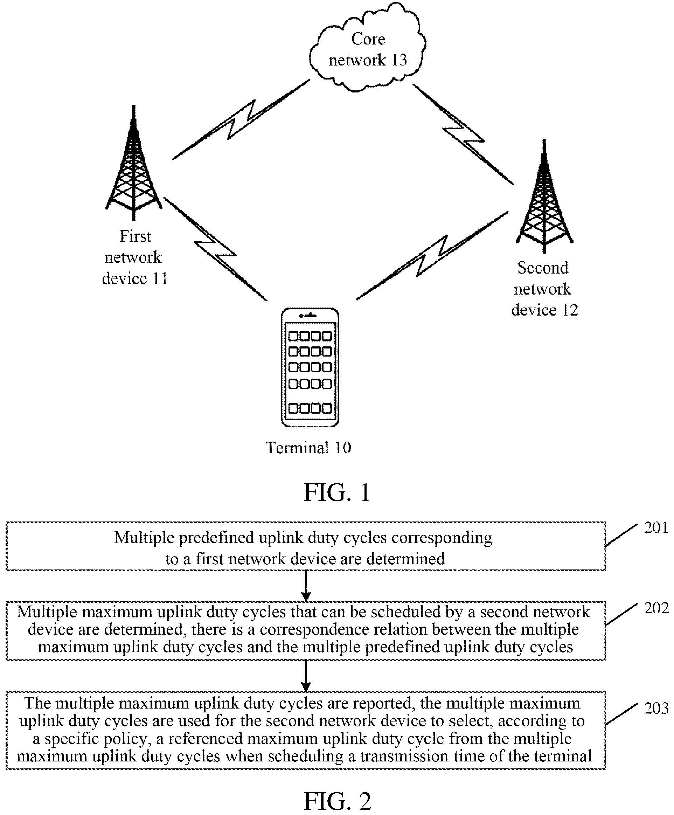

An embodiment of the present application first provides communication architecture. FIG. 1 is a schematic diagram of a structure of communication architecture according to an embodiment of the present application. As shown in FIG. 1, the communication architecture at least includes a terminal 10, a first network device 11, a second network device 12, and a core network 13; wherein, the terminal 10 achieves communication under multiple connections by accessing the first network device 11 and the second network device 12; both the first network device 11 and the second network device 12 are connected to the core network 13.

Of course, the terminal may also access three or more network devices simultaneously to achieve communication under multiple connections. In the process of implementation, terminals can be various types of devices with communication capabilities, such as cell phones, tablet computers, digital phones, video phones, smart watches, etc.

An embodiment of the present application provides a method for information processing, wherein the method is applied to a terminal, and a function realized by the method may be achieved by a processor in the terminal for calling program codes. Of course, the program codes may be stored in a computer storage medium, it shows that the terminal at least includes a processor and a storage medium.

FIG. 2 is a schematic flowchart of an implementation of a method for information processing according to an embodiment of the present application. As shown in FIG. 2, the method at least includes the following acts 201 to 203.

In Act 201, multiple predefined uplink duty cycles corresponding to a first network device are determined.

The uplink duty cycle refers to the percentage of uplink slots in the sum of uplink slots and downlink slots (i.e., the length of a time window) in the time window. For example, when a transmission time for transmitting signals by a terminal to a first network device within a time window is t1, and when a transmission time for transmitting signals by the first network device to the terminal within the time window is t2, then the uplink duty cycle within the time window is t1/(t1+t2).

A first network device is usually a device which is first accessed and regarded as a primary cell by the terminal. For example, a first network device is a base station adopting Long Term Evolution (LTE) (hereinafter referred to as LTE base station), or is a base station adopting the 5th-Generation New radio (NR base station). When the first network device is an LTE base station, the terminal acquires multiple predefined uplink duty cycles corresponding to the LTE base station from pre-stored predefined uplink duty cycle information, or requests the LTE base station for the corresponding predefined uplink duty cycles. When the first network device is an NR base station, the way in which the terminal acquires multiple predefined duty cycles corresponding to the NR base station is similar to that in the above-mentioned approach, and will not be repeated here.

In Act 202, multiple maximum uplink duty cycles that can be scheduled by a second network device are determined, there is a correspondence relation between the multiple maximum uplink duty cycles and the multiple predefined uplink duty cycles.

In some embodiments, a predefined uplink duty cycle corresponds to a maximum uplink duty cycle. Multiple predefined uplink duty cycles are different, and a size relationship among multiple maximum uplink duty cycles is not limited.

In an embodiment of the present application, a mode of a second network device may be identical or different from that of a first network device. The modes may be different, for example, the first network device is an LTE base station and the second network device is an NR base station, for another example, the first network device is an NR base station and the second network device is an LTE base station.

For a terminal under multiple connections, in order to prevent the SAR value from exceeding the limit, the terminal needs to limit transmission powers and transmission times of the antennas corresponding to the first network device and the second network device respectively. In some embodiments, a terminal can determine each maximum uplink duty cycle according to the attribute parameter information of its own antenna (such as antenna position and antenna efficiency, etc.).

Taking a first network device being an LTE base station and a second network device being an NR base station as an example, to simplify the operation, assuming that only a case where the terminal is at the maximum transmission power capability of the LTE antenna and the NR antenna is considered, the transmission times of the LTE antenna and the NR antenna need to meet certain constraints. As shown in Table 1 below, uplink duty cycles corresponding to an LTE base station are predefined multiple values (i.e. LTE predefined uplink duty cycle in Table 1), and maximum uplink duty cycles that can be scheduled by an NR base station are reported to the network as terminal capability.

In Table 1, there is a correspondence relation between the parameters in the same row. For example, the maximum uplink duty cycle that can be scheduled by an NR base station corresponding to LTE predefined uplink duty cycle Duty LTE 1 is maxULdutycycle-EN-DC1. The maximum uplink duty cycle that can be scheduled by an NR base station corresponding to LTE predefined uplink duty cycle DutyLTEn is maxULdutycycle-EN-DCn.

**Table 1**

| LTE predefined uplink duty cycle | NR base station schedulable maximum uplink duty cycle |
|---|---|
| DutyLTE1 | maxULdutycycle-EN-DC1 |
| DutyLTE2 | maxULdutycycle-EN-DC2 |
| ... | ... |
| DutyLTEm | maxULdutycycle-EN-DCm |
| DutyLTEn | maxULdutycycle-EN-DCn |

In another example, when a first network device is an NR base station and a second network device is an LTE base station, as shown in Table 2 below, uplink duty cycles corresponding to an NR base station are predefined multiple values (i.e. NR predefined uplink duty cycle in Table 2), and maximum uplink duty cycles that can be scheduled by an LTE base station are reported to the network as terminal capability. Similarly, in Table 2, there is a correspondence relation between the parameters in the same row.

**Table 2**

| NR predefined uplink duty | LTE base station schedulable Maximum uplink duty |
|---|---|
| cycle | cycle |
| DutyNR1 | maxULdutycycle-NE-DC1 |
| DutyNR2 | maxULdutycycle-NE-DC2 |
| ... | ... |
| DutyNRm | maxULdutycycle-NE-DCm |
| DutyNRn | maxULdutycycle-NE-DCn |

In Act 203, the multiple maximum uplink duty cycles are reported, the multiple maximum uplink duty cycles are used for the second network device to select, according to a specific strategy, a reference maximum uplink duty cycle from the multiple maximum uplink duty cycles when scheduling a transmission time of the terminal.

Understandably, as a terminal reports multiple maximum uplink duty cycles, for the terminal and the second network device, both sides need to make clear which maximum uplink duty cycle is referenced when scheduling uplink duty cycles in the same arbitrary time window. The second network device needs to determine which one of the reported multiple maximum uplink duty cycles should be the upper limit for scheduling the uplink duty cycle of the terminal.

In some embodiments, a second network device can schedule the transmission time of the terminal, so that the uplink duty cycle of the terminal within a time window is less than or equal to the referenced maximum uplink duty cycle.

In the embodiments of the present application, the terminal reports multiple maximum uplink duty cycles that can be scheduled by the second network device, the multiple maximum uplink duty cycles are used for the second network device to, according to an uplink duty cycle actually scheduled by a first network device, adaptively select a referenced maximum uplink duty cycle from the multiple maximum uplink duty cycles reported by the terminal. Therefore, when a first network device uses different uplink duty cycle configurations, a second network device can correspondingly adjust the referenced maximum uplink duty cycle capability, thus maximally ensuring that the terminal can meet SAR requirements while maintaining maximum power transmission.

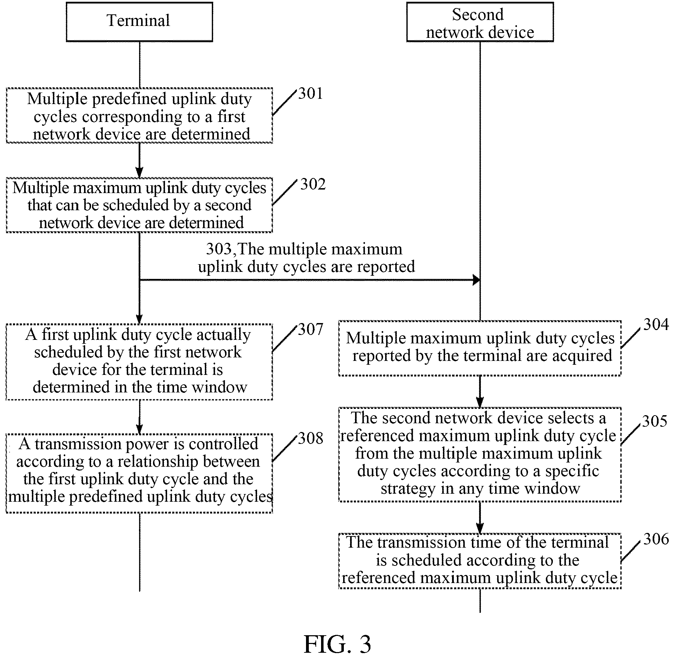

An embodiment of the present application further provides another method for information processing. FIG. 3 is a schematic flowchart of another implementation of a method for information processing according to an embodiment of the present application. As shown in FIG. 3, the method at least includes the following acts 301 to 308.

In Act 301, a terminal determines multiple predefined uplink duty cycles corresponding to a first network device.

In Act 302, the terminal device determines multiple maximum uplink duty cycles that can be scheduled by a second network device, there is a correspondence relation between the multiple maximum uplink duty cycles and the multiple predefined uplink duty cycles.

In Act 303, the terminal reports the multiple maximum uplink duty cycles.

In some embodiments, a terminal reports multiple maximum uplink duty cycles to a first network device in the process of accessing the first network device with the first network device being a primary cell, wherein the first network device is used for informing a second network device of the multiple maximum uplink duty cycles. In this way, the terminal does not need to separately report this information to the second network device in the subsequent interaction, thus saving network resources and reducing the complexity of information interaction.

In some embodiments, after acquiring information of the multiple maximum uplink duty cycles reported by a terminal, a first network device can directly forward the information to a second network device, or forward the information to a core network and the core network can send the information to the second network device.

In Act 304, a second network device acquires multiple maximum uplink duty cycles reported by the terminal.

In Act 305, the second network device selects a referenced maximum uplink duty cycle from the multiple maximum uplink duty cycles according to a specific strategy in any time window.

During the implementation, the second network device can dynamically monitor the uplink duty cycle actually scheduled by the first network device, so as to adaptively adjust the current referenced maximum uplink duty cycle, and further ensure that the terminal can maintain the maximum transmission power capability to the maximum extent while meeting the SAR index. For example, the second network device periodically performs monitoring, and the length of each period is the length of a time window.

In some embodiments, the second network device can implement Act 305 by performing acts 405 to 409 in the following embodiment, so as to select the referenced maximum uplink duty cycle from the multiple maximum uplink duty cycles when scheduling the uplink duty cycles for the terminal in any time window.

In Act 306, a second network device schedules the transmission time of the terminal according to the referenced maximum uplink duty cycle.

In Act 307, the terminal acquires a first uplink duty cycle actually scheduled by the first network device for the terminal in the time window.

Here, there is no limitation on how the terminal acquires the first uplink duty cycle, and the terminal itself can count the first uplink duty cycle actually scheduled by the first network device for the terminal in each time window. Alternatively, the terminal may also receive the first uplink duty cycle information sent by the first network device.

In some embodiments, the terminal can dynamically monitor the first uplink duty cycle actually scheduled by the first network device for the terminal. For example, the terminal performs monitoring periodically, and the length of each period is the length of the time window.

In another embodiment, the first network device may transmit the first uplink duty cycle information to the terminal. There is no limitation on the transmission mode. The first network device can transmit actively or passively based on the request message sent by the terminal. For actively transmitting, the first network device can periodically transmit, or can inform the terminal when the first uplink duty cycle changes.

It should be noted that in an embodiment of the present application, there is no limitation on the execution order of Act 303 and Act 307, and the terminal can execute Act 303 first, Act 307 first, or Act 303 and Act 307 in parallel.

In addition, in an embodiment of the present application, a first uplink duty cycle and a second uplink duty cycle described below do not specifically refer to a specific uplink duty cycle, but a description in a general sense, where "first" and "second" are only used to distinguish that uplink duty cycles are scheduled by different network devices. The first uplink duty cycle is an uplink duty cycle actually scheduled by a first network device for the terminal. The second uplink duty cycle is an uplink duty cycle actually scheduled by a second network device for the terminal. Similarly, the following first sum does not specifically refer to a specific value.

In some embodiments, a terminal determines a first sum of uplink slots actually scheduled by the first network device for the terminal within any aforementioned time window; the terminal determines a ratio of the first sum to a length of the time window as the first uplink duty cycle.

In Act 308, the terminal controls a transmission power according to a relationship between the first uplink duty cycle and the multiple predefined uplink duty cycles.

In an embodiment of the present application, a terminal can report information of multiple maximum uplink duty cycles, so that a second network device can schedule the transmission time of the terminal by using other uplink duty cycle capabilities when the uplink duty cycle actually scheduled by the first network device exceeds a certain value. In this way, the terminal does not have to carry out power back-off, and the power capability of the terminal can be effectively utilized.

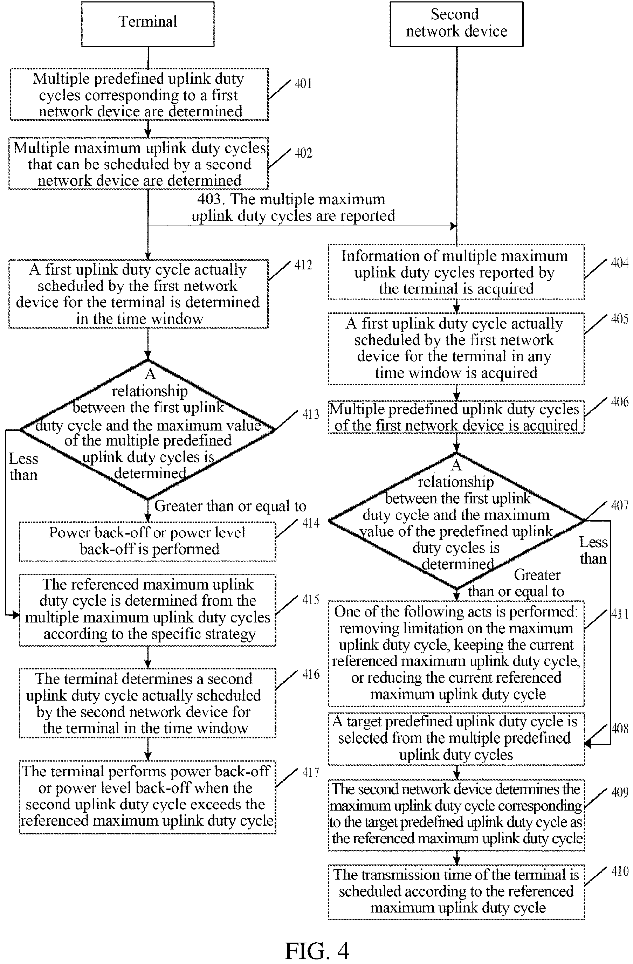

An embodiment of the present application further provides another method for information processing. FIG. 4 is a schematic flowchart of yet another implementation of a method for information processing according to an embodiment of the present application. As shown in FIG. 4, the method at least includes the following acts 401 to 417.

In Act 401, a terminal determines multiple predefined uplink duty cycles corresponding to a first network device.

In Act 402, the terminal device determines multiple maximum uplink duty cycles that can be scheduled by a second network device, there is a correspondence relation between the multiple maximum uplink duty cycles and the multiple predefined uplink duty cycles.

In Act 403, the terminal reports the multiple maximum uplink duty cycles.

In Act 404, the second network device acquires information of multiple maximum uplink duty cycles reported by the terminal.

In Act 405, the second network device acquires a first uplink duty cycle actually scheduled by the first network device for the terminal in any time window.

In some embodiments, a first network device can dynamically monitor an uplink duty cycle actually scheduled by the first network device itself for a terminal, and then send the monitoring result to a second network device. For example, the first network device periodically monitors an uplink duty cycle actually scheduled by the first network device itself for the terminal, and then sends the monitoring result obtained every time to the second network device, or sends the monitoring result to the second network device when the monitoring result changes. Wherein, a length of the monitoring period can be the length of a time window.

In Act 406, a second network device acquires multiple predefined uplink duty cycles of a first network device.

In some embodiments, the second network device can acquire information of multiple predefined uplink duty cycles of the first network device from the core network or the first network device. The second network device may also acquire the information of the multiple predefined uplink duty cycles from data pre-stored in the second network device itself.

In Act 407, a second network device determines a relationship between the first uplink duty cycle and the maximum value of the predefined uplink duty cycles; when the first uplink duty cycle is less than or equal to the maximum value, Act 408 is executed; otherwise, Act 411 is executed.

In Act 408, the second network device selects a target predefined uplink duty cycle from the multiple predefined uplink duty cycles.

In some embodiments, a second network device can determine a difference value between the first uplink duty cycle and each predefined uplink duty cycle; the second network device determines a larger one of the predefined uplink duty cycles corresponding to two minimum difference values as a target predefined uplink duty cycle when each difference value is not zero; and when one of the determined difference values is zero, the second network device determines a predefined uplink duty cycle corresponding to the determined difference value of zero as the target predefined uplink duty cycle.

For example, assuming that multiple predefined uplink duty cycles are 10%, 20%, 30% and 40% respectively. When the first uplink duty cycle is 20%, the target predefined uplink duty cycle is 20%; when the first uplink duty cycle is 25%, which is between 20% and 30%, the larger value, 30%, is taken as the target predefined uplink duty cycle.

In Act 409, the second network device determines the maximum uplink duty cycle corresponding to the target predefined uplink duty cycle as the referenced maximum uplink duty cycle.

For example, assume that the values of multiple predefined uplink duty cycles Dutylet1, Dutylet2, ..., Dutyletm and DutyLTEn increase in turn. Within a time window, when the second network device monitors that the uplink duty cycle actually scheduled by the LTE base station is between Duty LTE 1 and DutyLTE2, it selects a larger one, i.e. DutyLTE2, as the target predefined uplink duty cycle; accordingly, the referenced maximum uplink duty cycle is DutyLTEnmaxULdutycycle-EN-DC2 en-dc2.

Within a time window W, when the second network device monitors that the uplink duty cycle actually scheduled by the LTE base station is between DutyLTEm and DutyLTEn, it selects a larger one, i.e. DutyLTEn, as the target predefined uplink duty cycle; accordingly, the referenced maximum uplink duty cycle is DutyLTEnmaxULdutycycle-EN-DCn.

In this way, it can be ensured that the corresponding selected maximum uplink duty cycle is more reliable, thus ensuring that the SAR of the terminal will not exceed the limit.

In Act 410, the second network device schedules the transmission time of the terminal according to the referenced maximum uplink duty cycle.

In Act 411, the second network device performs one of the following acts when the first uplink duty cycle is greater than the maximum value of the multiple predefined uplink duty cycles: removing limitation on the maximum uplink duty cycle, keeping the current referenced maximum uplink duty cycle, or reducing the current referenced maximum uplink duty cycle.

It should be noted that Act 405 to Act 409 are implementation acts for the second network device to determine the referenced maximum uplink duty cycle in any time window. In fact, for the terminal, it is necessary to perform the contents similar to those of Act 405 to Act 409 within the same time window, so that the determined referenced maximum uplink duty cycle is consistent with the result determined by the second network device.

In an embodiment of the present application, the execution order of Act 403 and Act 412 is not limited, and the terminal can execute Act 403 first, or can execute Act 412 first, or Act 403 and Act 412 can be executed in parallel, that is, the terminal side and the second network device side can execute the acts of determining the referenced maximum uplink duty cycle in parallel.

In Act 412, a terminal acquires a first uplink duty cycle actually scheduled by the first network device for the terminal in the time window.

In Act 413, the terminal determines a relationship between the first uplink duty cycle and the maximum value of the multiple predefined uplink duty cycles; when the first uplink duty cycle is greater than the maximum value, Act 414 is executed; otherwise, Act 415 is executed.

Understandably, after obtaining the first uplink duty cycle, the terminal first determines the relationship between the first uplink duty cycle and the maximum value, and only executes Act 415 when the first uplink duty cycle is less than or equal to the maximum value. In such a way, when the first uplink duty cycle is greater than the maximum value, power back or power level back can be performed more timely, thereby minimizing the harm of electromagnetic radiation to human body.

In Act 414, the terminal performs power back-off or power level back-off.

Understandably, when the terminal performs power back-off or power level back-off, it may not be controlled by the network side. That is to say, when the terminal detects that a condition for reducing the transmission power is met, it actively performs power back-off or power level back-off without waiting for indication from the network side. In this way, the transmission power can be reduced faster, thus minimizing the harm of electromagnetic radiation to human body.

In Act 415, the terminal determines the referenced maximum uplink duty cycle from the multiple maximum uplink duty cycles according to the specific strategy.

When implementing Act 415, the terminal can first determine a difference value between the first uplink duty cycle and each predefined uplink duty cycle; determine a larger one of the predefined uplink duty cycles corresponding to two minimum difference values as a target predefined uplink duty cycle when each difference value is not zero; and determine the maximum uplink duty cycle corresponding to the target predefined uplink duty cycle as the referenced maximum uplink duty cycle.

In some embodiments, when one of the determined difference values is zero, a terminal determines the predefined uplink duty cycle corresponding to the determined difference value of zero as the target predefined uplink duty cycle.

Understandably, in a same time window, the terminal and the second network device need to determine the referenced maximum uplink duty cycle based on the same or similar specific strategy. Only in this way, the results in two choices can just be consistent, thus avoiding the problem of SAR limit-exceeding caused by misoperation of a terminal or the problem of power loss caused by unnecessary power back-off performed by the terminal.

For example, the referenced maximum uplink duty cycles determined by the terminal side and the second network device side are 10% and 20% respectively, while the uplink duty cycle actually scheduled by the second network device detected by the terminal is 15%. Since 15% is greater than 10%, the terminal will perform power back-off at this time. But in fact, the referenced maximum uplink duty cycle is 20% when the second network device actually schedules the uplink duty cycle of the terminal, so if the terminal continues to maintain the current transmission power, it can be ensured that the SAR does not exceed the limit. However, the terminal also reduces the transmission power at the same time, which will lead to unnecessary power loss.

For another example, the referenced maximum uplink duty cycles determined by the terminal side and the second network device side are 30% and 20% respectively. Then, if the terminal detects that the uplink duty cycle actually scheduled by the second network device is 25%, which is less than 30%, the terminal will continue to maintain the current transmission power at this time. While in fact, the referenced maximum uplink duty cycle is 20% when the second network device actually schedules the uplink duty cycle of the terminal. Therefore, the terminal should perform power back-off or power level back-off, otherwise the SAR limit-exceeding will be caused.

In some embodiments, the terminal may also send a request message to the second network device to request to know the current maximum uplink referenced by the second network device, but this way is at the cost of sacrificing channel resources and increasing communication complexity.

In Act 416, a terminal acquires a second uplink duty cycle actually scheduled by the second network device for the terminal in the time window.

Here, there is no limitation on how the terminal acquires the second uplink duty cycle, and the terminal itself can count the second uplink duty cycle actually scheduled by the second network device for the terminal in each time window. Alternatively, the terminal may also receive the second uplink duty cycle information sent by the second network device.

In some embodiments, the terminal can dynamically monitor the second uplink duty cycle actually scheduled by the second network device for the terminal. For example, the terminal performs monitoring periodically, and the length of each period is the length of the time window.

In another embodiment, the second network device may transmit the second uplink duty cycle information to the terminal. There is no limitation on the transmission mode. The second network device can transmit actively or passively based on the request message sent by the terminal. For actively transmitting, the second network device can periodically transmit, or can inform the terminal when the second uplink duty cycle changes.

In Act 417, a terminal performs power back-off or power level back-off when the second uplink duty cycle exceeds the referenced maximum uplink duty cycle.

Understandably, a terminal performs power back-off or power level back-off when the second uplink duty cycle exceeds the referenced maximum uplink duty cycle, so that it can be ensured that the SAR of the terminal will not exceed the limit, thereby ensuring that human health is not harmed.

In some embodiments, when the second uplink duty cycle does not exceed the referenced maximum uplink duty cycle, the terminal maintains the current power or maintains the current power level.

An embodiment of the present application further provides another method for information processing, which at least includes the following acts 501 to 508.

In Act 501, a terminal determines multiple predefined uplink duty cycles corresponding to a first network device.

In Act 502, the terminal acquires attribute parameter information of an antenna.

In some embodiments, the attribute parameter information may include antenna position and antenna efficiency. Assuming that an antenna connected to a first network device in a terminal is a first antenna (such as an LTE antenna), and an antenna connected to a second network device is a second antenna (such as an NR antenna), the antenna position includes a relative position of the first antenna and the second antenna, and the antenna position may also include a position of the first antenna and a position of the second antenna.

In Act 503, the terminal determines each of the maximum uplink duty cycles according to the attribute parameter information, wherein there is a one-to-one correspondence relation between the maximum uplink duty cycles and the predefined uplink duty cycles.

In Act 504, the terminal reports the determined multiple maximum uplink duty cycles to the first network device in a process of accessing the first network device with the first network device being as the primary cell.

In Act 505, the first network device informs the second network device of the multiple maximum uplink duty cycles.

For example, the first network device directly sends the multiple maximum uplink duty cycles to the second network device, or the first network device sends the multiple maximum uplink duty cycles to a core network, so that the second network device can acquire the multiple maximum uplink duty cycles through a communication link with the core network. Understandably, both the first network device and the second network device are connected to the core network, so that the terminal reports the multiple maximum uplink duty cycles when firstly accessing the first network device, and information of the reported multiple maximum uplink duty cycles is stored in the core network, so that the second network device acquires the information of the multiple maximum uplink duty cycles faster, thus minimizing the harm of electromagnetic radiation to human body.

In Act 506, the second network device acquires the multiple maximum uplink duty cycles reported by the terminal.

In Act 507, the second network device adaptively selects a referenced maximum uplink duty cycle from the multiple maximum uplink duty cycles according to a specific strategy.

The second network device can achieve Act 507 through Act 405 to Act 409 in the above embodiment. After determining multiple maximum uplink duty cycles, in addition to reporting the information, the terminal needs to perform the contents similar to those of Act 405 to Act 40 9 in a same time window, so that the determined referenced maximum uplink duty cycle is consistent with the result determined by the second network device. Details will not be repeated here for brevity.

In Act 508, the second network device schedules the transmission time of the terminal according to the referenced maximum uplink duty cycle.

It should be noted that in some embodiments, for the terminal and the second network device, it may also be the case that only one party of the two determines the maximum uplink duty cycle referenced by the second network device, and after one party of the two determines the referenced maximum uplink duty cycle in a certain time window, the information can be notified to the other party. For example, in a time window, the terminal determines the referenced maximum uplink duty cycle from the multiple maximum uplink duty cycles according to the specific strategy, and informs the second network device which maximum uplink duty cycle is referenced in this time window. Or, after determining the referenced maximum uplink duty cycle, the second network device informs the terminal which maximum uplink duty cycle is referenced by the second network device when scheduling its transmission time in the time window.

From the point of view of reducing terminal radiation time, the terminal capability of maximum uplink slot duty cycle (maxULdutycycle) is introduced, that is, the maximum uplink duty cycle, which can be supported when SAR or MPE is met in a certain frequency band, reported by the terminal to the network. When the uplink duty cycle scheduled by the network exceeds this capability, the terminal adopts power back-off to reduce SAR and MPE values.

For EN-DC (LTE and NR dual connection) terminals, solutions generally considered are usually that a terminal reports a pair of maximum uplink duty cycle capacities that can be scheduled by LTE and NR networks respectively at the same time, or reports one NR uplink duty cycle according to an LTE uplink duty cycle, etc. The disadvantage of this solution lies in that, although it can be ensured that the SARs of the EN-DC terminal working in LTE and NR at the same time do not exceed the limit, the terminal needs to perform power back-off when one uplink duty cycle of LTE mode or NR mode exceeds the reported capability value. In fact, when the uplink duty cycle of one mode exceeds the reported capacity value, the terminal can still meet the requirement that SAR does not exceed the limit by reducing the uplink duty cycle of another mode.

Based on this, an exemplary application of an embodiment of the present application in an actual application scenario will be explained in the following.

For a Multi-connection terminal (taking EN-DC as an example below), transmission power or transmission time of the terminal can be limited so as to meet the requirement that the SAR value does not exceed the limit. In the following, the scheduling mechanism of the uplink transmission time of the EN-DC terminal is described from the angle of limiting the transmission time, the transmission time is maximized while meeting the SAR index.

In an EN-DC network, the terminal needs to access an LTE network first and take the network as a primary cell. In this process, the terminal reports the maximum uplink duty cycle capacity of NR to an LTE primary cell, and then the LTE network further configures an NR secondary cell.

In order to satisfy SAR, the terminal needs to limit transmission powers and transmission times of LTE and NR respectively. To simplify the operation, in the following embodiment, only an application scenario where, for a terminal, both LTE and NR are at the maximum transmission power capability is considered, then the transmission times of LTE and NR need to meet certain restrictions. As shown in Table 3 below, the uplink duty cycles of LTE are predefined multiple values, and the NR schedulable maximum uplink duty cycles is reported to the network as the terminal capability.

**Table 3**

| LTE predefined uplink duty cycle | NR schedulable maximum uplink slot duty cycle capability |
|---|---|
| DutyLTE1 | maxULdutycycle-EN-DC1 |
| DutyLTE2 | maxULdutycycle-EN-DC2 |
| ... | ... |
| DutyLTEm | maxULdutycycle-EN-DCm |
| DutyLTEn | maxULdutycycle-EN-DCn |

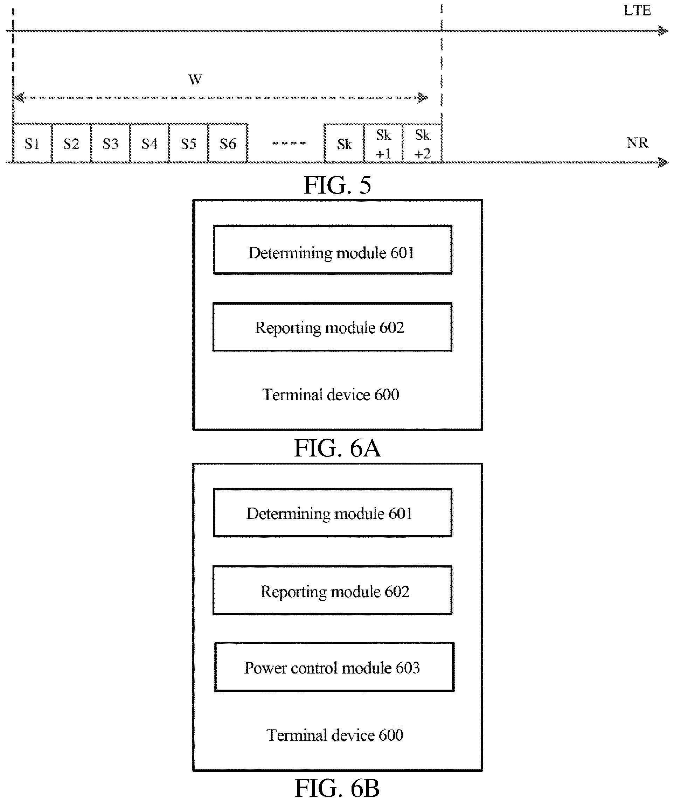

Since the terminal reported multiple maximum uplink duty cycles of NR, for NR network and the terminal, it is necessary to clarify which maximum uplink duty cycle capability should be followed (that is, referenced) when scheduling uplink duty cycles in any time window W. The schematic diagram of one time window W is shown in FIG 5. For NR side, one time window W includes time units S1 to Sk+2, where the time unit can be a slot, symbol or subframe, etc. For LTE side, its time window W is aligned with that of the NR side.

Taking a time window W as an example, a method of selecting maximum uplink capacity of NR will be introduced below, where it is assumed that DutyLTE1 < DutyLTE2 < ... < DutyLTEm < DutyLTEn.

Within the time window W, when the terminal and the network detect that the uplink duty cycle actually scheduled of LTE is between DutyLTE1 and DutyLTE2, it is considered that the uplink duty cycle of LTE is the larger one, i.e., DutyLTE2, and the corresponding NR schedulable maximum uplink duty cycle capacity is maxULdutycycle-EN-DC2 en-DC2. When the uplink duty cycle actually scheduled of NR exceeds this capacity, the terminal needs to perform power back-off or power level back-off. Of course, when the uplink duty cycle actually scheduled of NR does not exceed this capacity, the terminal continues to maintain the current transmission power.

Within the time window W, when the terminal and the network detect that the uplink duty cycle actually scheduled of LTE is between DutyLTEm and DutyLTEn, it is considered that the uplink duty cycle of LTE is the larger one, i.e. DutyLTEn, and the corresponding NR schedulable maximum uplink duty cycle capacity is maxULdutycycle-EN-DCn. When the uplink duty cycle actually scheduled of NR exceeds this capacity, the terminal needs to perform power back-off or power level back-off. Of course, when the uplink duty cycle actually scheduled of NR does not exceed this capacity, the terminal continues to maintain the current transmission power.

Within the time window W, when the uplink duty cycle actually scheduled of LTE exceeds DutyLTEn (that is, the predefined maximum uplink duty cycle of LTE), the terminal needs to perform power back-off or power level back-off.

From the above example, it can be seen that the uplink duty cycle of LTE needs to round up to a value which is closest to the predefined uplink duty cycle, and the corresponding maximum uplink duty cycle capability of NR is acquired, and the maximum uplink duty cycle capability of NR is not always fixed, but changes with the uplink duty cycle actually scheduled of LTE within the time window W.

By reporting a set of maximum uplink capacities of NR, the terminal can correspondingly adjust the maximum uplink capacity of NR under different LTE uplink configurations, and keep the maximum power transmission.

Through the implementation of the above technical solution, it can be ensured that the terminal can adjust the maximum uplink duty cycle capability of NR by adapting to the uplink duty cycle of LTE, thus ensuring, to the utmost extent, that the EN-DC terminal can meet the SAR while maintaining the maximum transmission power capability.

In an embodiment of the present application, a scheduling method (i.e., information processing method) for transmission time of a multi-connection terminal is provided. In this scheduling method, the terminal reports, according to information of the predefined multiple uplink duty cycles of an A-mode base station (that is, the first network device), information of the multiple uplink duty cycle capabilities (such as information of maximum uplink duty cycle) of a B-mode base station (i.e., the second network device) corresponding to information of each predefined uplink duty cycle. B-mode base station performs scheduling according to this set of capability information. The terminal decides to adopt the uplink duty cycle capability corresponding to the B-mode base station by monitoring information of the uplink duty cycles scheduled by the A-mode base station.

In an embodiment of the present application, key technical features involved include the following.
(1) A terminal reports information of multiple uplink duty cycle capabilities that can be scheduled by a B-mode base station, and all uplink duty cycle capabilities of this group of capability information corresponds to the uplink duty cycles of an A-mode base station respectively.
(2) The terminal decides which corresponding schedulable proportion capability in the B-mode base station capability information group previously reported is adopted by monitoring the uplink duty cycles actually scheduled by the A-mode base station.
(3) The B-mode base station decides which duty cycle capacity in the capacity information group previously reported by the terminal is adopted by acquiring the uplink duty cycles actually scheduled by the A-mode base station for the terminal.

Understandably, the capability information reported by the terminal to the network is generally a capability, which only corresponds to the uplink configuration of a certain A-mode base station. When the uplink duty cycle of either the A-mode base station or the B-mode base station exceeds the terminal capability, power back-off needs to be performed on the transmission power of the terminal. However, in an embodiment of the present application, the terminal reports multiple capacity values (such as the maximum uplink duty cycles), that is, when an uplink duty cycle actually scheduled by the A-mode base station exceeds a certain value, the terminal can adopt other uplink duty cycle capacities for the B-mode base station without having to perform power back-off. In this way, the power capacity of the terminal can be effectively utilized.

In an embodiment of the application, the terminal reports information of multiple uplink duty cycle capabilities that can be scheduled by the B-mode base station, wherein information of each duty cycle capability corresponds to an uplink duty cycle of the A-mode base station. The base station and the terminal determine an adopted uplink duty cycle capability of the B-mode base station by dynamically monitoring the uplink duty cycles actually scheduled by the A-mode base station.

Based on the foregoing embodiments, an embodiment of the present application provides a terminal device, the terminal device includes various modules and various units included in the modules, which can be achieved by a processor in the terminal, of course, they may also be implemented by a specific logic circuit. In an implementation process, the processor may be a central processing unit (CPU), a microprocessor (MPU), a digital signal processor (DSP) or a field programmable gate array (FPGA), etc.

FIG. 6A is a schematic diagram of a structure of a terminal device according to an embodiment of the present application. As shown in FIG. 4, a terminal device 600 includes a determining module 601 and a reporting module 602.

The determining module is configured to determine multiple predefined uplink duty cycles corresponding to a first network device; and determine multiple maximum uplink duty cycles that can be scheduled by a second network device, there is a correspondence relation between the multiple maximum uplink duty cycles and the multiple predefined uplink duty cycles.

The reporting module 602 is configured to report the multiple maximum uplink duty cycles, the multiple maximum uplink duty cycles are used for the second network device to select therefrom, according to a specific strategy, a referenced maximum uplink duty cycle when scheduling a transmission time of the terminal.

In some embodiments, as shown in FIG. 6B, the terminal device 600 further includes a power control module 603. The determining module 601 is further configured to acquire a first uplink duty cycle actually scheduled by the first network device for the terminal in any time window; and the power control module 603 is configured to control the transmission power according to a relationship between the first uplink duty cycle and the multiple predefined uplink duty cycles.

The power control module 603 is configured to determine a relationship between the first uplink duty cycle and a maximum value of the multiple predefined uplink duty cycles; and perform power back-off or power level back-off when the first uplink duty cycle is greater than the maximum value.

The determining module 601 is further configured to determine the referenced maximum uplink duty cycle from the multiple maximum uplink duty cycles according to the specific strategy when the first uplink duty cycle is less than or equal to the maximum value.

The determining module 601 is configured to determine a difference value between the first uplink duty cycle and each predefined uplink duty cycle; determine a larger one of the predefined uplink duty cycles corresponding to two minimum difference values as a target predefined uplink duty cycle when each difference value is not zero; and determine the maximum uplink duty cycle corresponding to the target predefined uplink duty cycle as the referenced maximum uplink duty cycle.

In some embodiments, the determining module 601 is further configured to determine a predefined uplink duty cycle corresponding to zero as the target predefined uplink duty cycle when one of the determined difference values is zero.

In some embodiments, the power control module 603 is further configured to acquire a second uplink duty cycle actually scheduled by the second network device for the terminal in the time window; and perform power back-off or power level back-off when the second uplink duty cycle exceeds the referenced maximum uplink duty cycle.

In some embodiments, the determining module 601 is configured to determine a first sum of uplink slots actually scheduled by the first network device for the terminal within the time window; and determine a ratio of the first sum to a length of the time window as the first uplink duty cycle.

In some embodiments, the reporting module 602 is configured to report the multiple maximum uplink duty cycles to the first network device in a process of accessing with the first network device being a primary cell, wherein the first network device is used for informing the second network device of the multiple maximum uplink duty cycles.

In some embodiments, the determining module 601 is configured to acquire attribute parameter information of an antenna; and determine each of the maximum uplink duty cycles according to the attribute parameter information, wherein there is a one-to-one correspondence relation between the maximum uplink duty cycles and the predefined uplink duty cycles.

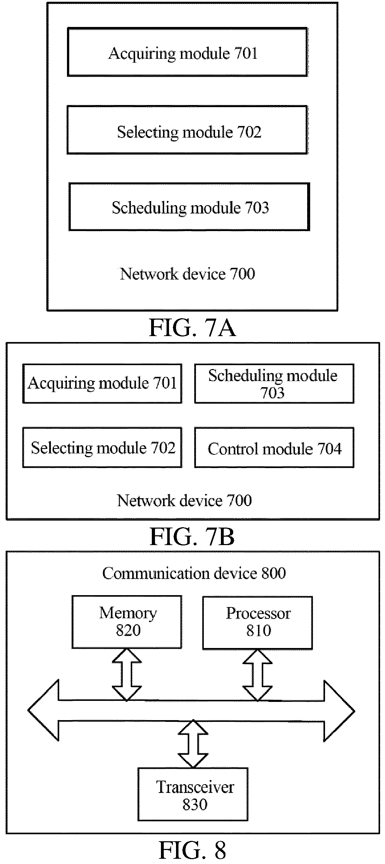

An embodiment of the present application provides a network device. FIG. 7A is a schematic diagram of a structure of a network device according to an embodiment of the present application. As shown in FIG. 7A, a network device 700 includes an acquiring module 701, a selecting module 702, and a scheduling module 703.

The acquiring module 701 is configured to acquire multiple maximum uplink duty cycles reported by a terminal.

The selecting module 702 is configured to adaptively select a referenced maximum uplink duty cycle from the multiple maximum uplink duty cycles according to a specific strategy.

The scheduling module 703 is configured to schedule a transmission time of the terminal according to the referenced maximum uplink duty cycle.

The selecting module 702 is configured to acquire a first uplink duty cycle actually scheduled by a first network device for the terminal in any time window; acquire multiple predefined uplink duty cycles of the first network device; select a target predefined uplink duty cycle from the multiple predefined uplink duty cycles when the first uplink duty cycle is less than or equal to the maximum value of the multiple predefined uplink duty cycles; and determine the maximum uplink duty cycle corresponding to the target predefined uplink duty cycle as the referenced maximum uplink duty cycle.

In some embodiments, the selecting module 702 is configured to determine a difference value between the first uplink duty cycle and each predefined uplink duty cycle; determine a larger one of the predefined uplink duty cycles corresponding to two minimum difference values as a target predefined uplink duty cycle when each difference value is not zero; determine the predefined uplink duty cycle corresponding to zero as the target predefined uplink duty cycle when one of the determined difference values is zero.

In some embodiments, as shown in FIG. 7B, a network device 700 further includes a control module 704, configured to perform one of the following acts when the first uplink duty cycle is greater than the maximum value of the multiple predefined uplink duty cycles: removing limitation on the maximum uplink duty cycle, keeping the current referenced maximum uplink duty cycle, or reducing the current referenced maximum uplink duty cycle.

The description of the above device embodiment is similar to the description of the above method embodiment, and has similar beneficial effects as the method embodiment. For technical details not disclosed in the device embodiments of the present application, please refer to the description of the method embodiments of the present application to understand.

It should be noted that in the embodiments of the present application, if the above method for processing information is implemented in a form of a software function module, and when sold or used as an independent product, it may also be stored in a computer readable storage medium. Based on this understanding, the technical solutions of the embodiments of the present application, in essence, or the part contributing to the related art, may be embodied in the form of a software product, the computer software product is stored in one storage medium and includes several instructions to make an electronic device (which may be a mobile phone, a tablet, a digital telephone, a video telephone, a smart watch, etc.) perform all or part of the method described in various embodiments of the present application. And the aforementioned storage medium includes various media which may store program codes, such as a U disk, a mobile hard disk, a Read Only Memory (ROM), a magnetic disk or an optical disk. Thus, the embodiments of the present application are not limited to any specific combination of hardware and software.

FIG. 8 is a schematic diagram of structure of a communication device 800 according to an embodiment of the present application. The communication device 800 shown in FIG. 8 includes a processor 810, which may call and run a computer program from a memory to implement the methods in the embodiments of the present application.

Optionally, as shown in FIG. 8, the communication device 800 may further include a memory 820. Herein, the processor 810 may call and run a computer program from the memory 820 to implement a method in an embodiment of the present application.

Herein, the memory 820 may be a separate device independent of the processor 810, or may be integrated in the processor 810.

Optionally, as shown in FIG. 8, the communication device 800 may further include a transceiver 830, and the processor 810 may control the transceiver 830 to communicate with another device. Specifically, the transceiver 630 may send information or data to another device or receive information or data sent by another device.

Herein, the transceiver 830 may include a transmitter and a receiver. The transceiver 830 may further include antennas, a quantity of which may be one or more.

Optionally, the communication device 800 may be specifically the network device according to the embodiments of the present application, and the communication device 800 may implement the corresponding processes implemented by the network device in various methods in the embodiments of the present application, which will not be repeated here for brevity.

Optionally, the communication device 800 may be specifically the mobile terminal/terminal device according to the embodiments of the present application, and the communication device 800 may implement the corresponding processes implemented by the mobile terminal/terminal device in various methods in the embodiments of the present application, which will not be repeated here for brevity.

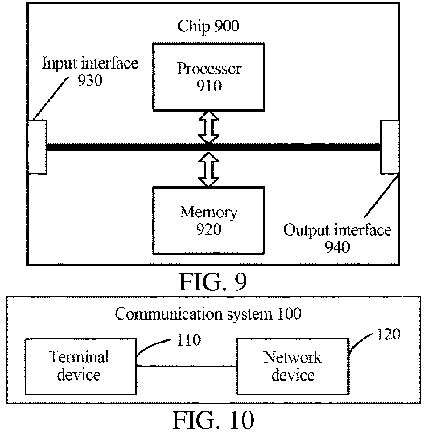

FIG. 9 is a schematic diagram of structure of a chip according to an embodiment of the present application. The chip 900 shown in FIG. 9 includes a processor 910, which may call and run a computer program from a memory to implement the methods in the embodiments of the present application.

Optionally, as shown in FIG. 9, the chip 900 may further include a memory 920. Herein, the processor 910 may call and run a computer program from the memory 920 to implement a method in an embodiment of the present application.

Herein, the memory 920 may be a separate device independent of the processor 910, or may be integrated in the processor 910.

Optionally, the chip 900 may further include an input interface 930. Herein, the processor 910 may control the input interface 930 to communicate with another device or chip. Specifically, the processor 710 may obtain information or data sent by another device or chip.

Optionally, the chip 900 may further include an output interface 940. Herein, the processor 910 may control the output interface 940 to communicate with another device or chip. Specifically, the processor 710 may output information or data to another device or chip.

Optionally, the chip may be applied to the network device in the embodiments of the present application, and the chip may implement the corresponding flow implemented by the network device in the various methods in the embodiments of the present application, which will not be repeated here for brevity.

Optionally, the chip may be applied to the mobile terminal/terminal device in the embodiments of the present application, and the chip may implement the corresponding flow implemented by the mobile terminal/terminal device in the various methods in the embodiments of the present application, which will not be repeated here for brevity.

It should be understood that the chip mentioned in the embodiments of the present application may also be referred to as a system-level chip, a system chip, a chip system, or a system chip on a chip, etc.

FIG. 10 is a schematic block diagram of a communication system 100 according to an embodiment of the present application. As shown in FIG. 10, the communication system 100 includes a terminal device 110 and a network device 120.

The terminal device 110 may be configured to implement the corresponding functions implemented by the terminal device in the above-mentioned methods, and the network device 120 may be configured to implement the corresponding functions implemented by the network device in the above-mentioned methods, which will not be repeated here for brevity.

It should be understood that the processor in the embodiments of the present application may be an integrated circuit chip with a capability for processing signals. In an implementation process, various acts of the method embodiments described above may be completed through an integrated logic circuit of hardware in a processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or a transistor logic device, or a discrete hardware component. The processor may implement various methods, acts, and logic block diagrams disclosed in the embodiments of the present application. The general purpose processor may be a microprocessor or the processor may be any conventional processor or the like. The acts of the methods disclosed in connection with the embodiments of the present application may be directly embodied by execution of a hardware decoding processor, or by execution of a combination of hardware and software modules in a decoding processor. The software modules may be located in a storage medium mature in the field, such as a Random Access Memory, a flash memory, a Read-Only Memory, a Programmable Read-Only Memory, or an electrically erasable programmable memory, or a register. The storage medium is located in a memory, and a processor reads information in the memory and completes the acts of the above methods in combination with its hardware.

It should be understood that the memory in the embodiments of the present application may be a transitory memory or a non-transitory memory, or may include both transitory and non-transitory memory. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) which serves as an external cache. As an example, but not as a restriction, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that, the foregoing memories are examples for illustration and should not be construed as limitations. For example, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Direct Rambus RAM (DR RAM), or the like. That is, the memories in the embodiments of the present application are intended to include, but are not limited to, these and any other suitable types of memories.

An embodiment of the present application further provides a computer readable storage medium configured to store a computer program.

Optionally, the computer readable storage medium may be applied to a network device in an embodiment of the present application, and the computer program enables a computer to perform the corresponding processes implemented by the network device in various methods according to the embodiments of the present application, which will not be repeated here for brevity.

Optionally, the computer readable storage medium may be applied to the mobile terminal/terminal device in the embodiments of the present application, and the computer program enables a computer to perform the corresponding processes implemented by the mobile terminal/terminal device in various methods according to the embodiments of the present application, which will not be repeated here for brevity.

An embodiment of the present application further provides a computer program product, including computer program instructions.

Optionally, the computer program product may be applied to a network device in an embodiment of the present application, and the computer program instructions enable a computer to perform the corresponding processes implemented by the network device in various methods according to the embodiments of the present application, which will not be repeated here for brevity.

Optionally, the computer program product may be applied to the mobile terminal/terminal device in the embodiments of the present application, and the computer program instructions enable a computer to perform the corresponding processes implemented by the mobile terminal/terminal device in various methods according to the embodiments of the present application, which will not be repeated here for brevity.

An embodiment of the present application further provides a computer program.

Optionally, the computer program may be applied to a network device in an embodiment of the present application. When the computer program is run on a computer, the computer is enabled to perform the corresponding processes implemented by the network device in various methods according to the embodiments of the present application, which will not be repeated here for brevity.

Optionally, the computer program may be applied to the mobile terminal/terminal device in the embodiments of the present application. When the computer program is run on a computer, the computer is enabled to perform the corresponding processes implemented by the mobile terminal/terminal device in various methods according to the embodiments of the present application, which will not be repeated here for brevity.

It should be pointed out here that the descriptions of the above storage medium, computer program, chip and the device embodiment are similar to the description of the above method embodiments, and they have similar beneficial effects as the method embodiments. For technical details not disclosed in the storage medium and the device embodiment of the present application, please refer to the description of the method embodiments of the present application to understand.

It should be understood that "one embodiment" or "an embodiment" mentioned throughout the specification means that a particular feature, a structure, or a characteristic related to the embodiments is included in at least one embodiment of the present application. Thus, "in one embodiment" or "in an embodiment" in the specification may not definitely refer to the same embodiment. In addition, the particular features, structures, or characteristics may be combined in any suitable manner in one or more embodiments. It should be understood that in various embodiments of the present application, sequence numbers of the various processes do not imply an order of execution of the various processes, which should be determined by their functions and internal logics, but should not constitute any limitation on implementation processes of the embodiments of the present application. The above-mentioned serial numbers of the embodiments of the present application are only for description, and do not represent superiority and inferiority of the embodiments.

It should be noted that in the present application, the terms "include", "contain" or any other variations thereof are intended to cover a non-exclusive inclusion, such that a process, method, article, or device that includes a list of elements includes not only those elements but also other elements not expressly listed, or further includes elements inherent to such process, method, article, or device. An element defined by a statement "include one" does not exclude presence of additional identical elements in the process, method, article or system that includes the element, without more limitations.

In several embodiments provided by the present application, it should be understood that disclosed devices and methods may be implemented in another mode. The device embodiments described above are only illustrative, for example, a partition of units is only a logical function partition, and there may be other partition manners in actual implementation. For example, multiple units or components may be combined or integrated into another system, or some features may be ignored or not executed. In addition, mutual coupling or direct coupling or communication connection between various components shown or discussed may be indirect coupling or communication connection between devices or units through some interfaces, and may be electrical, mechanical or in other forms.

The above units described as separate components may or may not be physically separated, and a component shown as the unit may be or may not be a physical unit; it may be located in one place, or may be distributed over multiple network units. Some or all of the units therein may be selected according to an actual requirement to achieve a purpose of the solution of the present embodiment.

In addition, various functional units in various embodiments of the present application may all be integrated in one processing unit, or each unit may be separately presented as one unit, or two or more units may be integrated in one unit. The above-mentioned integrated units may be implemented in a form of hardware, or in a form of hardware plus software functional units.

One ordinary skilled in the art can understand that, all or part of the acts for implementing the above method embodiments may be accomplished by hardware related to program instructions, and the aforementioned program may be stored in a computer readable storage medium. The program, when executed, performs acts including the above method embodiments. And the aforementioned storage media include: various media which may store program codes, such as a removable storage device, a Read Only Memory (ROM), a magnetic disk, or an optical disk, etc.

Alternatively, the integrated units described above in the present application may be stored in a computer readable storage medium, if implemented in a form of software functional module and sold or used as a separate product. Based on this understanding, the technical solutions of the embodiments of the present application, in essence, or the part contributing to the related art, may be embodied in the form of a software product, the computer software product is stored in one storage medium and includes several instructions to make an electronic device (which may be a mobile phone, a tablet, a digital telephone, a video telephone, a smart watch, etc.) perform all or part of the method described in various embodiments of the present application. And the aforementioned storage medium includes various media which may store program codes, such as a removable storage device, a ROM, a magnetic disk, or an optical disk, etc.

The methods disclosed in several method embodiments provided in the present application may be arbitrarily combined without conflict to obtain a new method embodiment.

The features disclosed in several product embodiments provided in the present application may be arbitrarily combined without conflict to obtain a new product embodiment.

The features disclosed in several method or device embodiments provided in the present application may be arbitrarily combined without conflict to obtain a new method embodiment or device embodiment.

What are described above are merely implementations of the present application, but the protection scope of the present application is not limited thereto. Therefore, the protection scope of the present application shall be subject to the protection scope defined by the claims.

## Claims

1. A method for information processing, performed by a terminal, comprising:
according to a plurality of predefined uplink duty cycles corresponding to a first network device, determining a plurality of maximum uplink duty cycles capable of being scheduled by a second network device, wherein there is a correspondence relation between the plurality of maximum uplink duty cycles and the plurality of predefined uplink duty cycles (202, 302, 402); and
reporting the plurality of maximum uplink duty cycles, wherein the plurality of maximum uplink duty cycles are used for the second network device to select, according to a specific strategy, a referenced maximum uplink duty cycle from the plurality of maximum uplink duty cycles when scheduling a transmission time of the terminal (203, 303, 403);
**characterized in that** the method further comprises:
controlling the transmission power according to a relationship between the first uplink duty cycle and the plurality of predefined uplink duty cycles (308); wherein controlling the transmission power according to the relationship between the first uplink duty cycle and the plurality of predefined uplink duty cycles comprises:
acquiring a first uplink duty cycle actually scheduled by a first network device for the terminal in a time window (412);
determining a relationship between the first uplink duty cycle and a maximum value of the plurality of predefined uplink duty cycles (413); and
performing power back-off or power level back-off when the first uplink duty cycle is greater than the maximum value (414);
when the first uplink duty cycle is less than or equal to the maximum value, the method further comprises:
determining a referenced maximum uplink duty cycle from the plurality of maximum uplink duty cycles according to a specific strategy (415),
acquiring a second uplink duty cycle actually scheduled by the second network device for the terminal in the time window (416); and
performing power back-off or power level back-off when the second uplink duty cycle exceeds the referenced maximum uplink duty cycle (417).

2. The method of claim 1, further comprising:
determining the plurality of predefined uplink duty cycles corresponding to the first network device (201, 301, 401).

3. The method of claim 1, wherein an uplink duty cycle indicates a percentage of uplink slots in a sum of uplink slots and downlink slots in a time window.

4. A method for information processing, applied to a network device, comprising:
acquiring a plurality of maximum uplink duty cycles reported by a terminal (304, 404), wherein the plurality of maximum uplink duty cycles capable of being scheduled by a second network device are determined according to a plurality of predefined uplink duty cycles corresponding to a first network device, wherein there is a correspondence relation between the plurality of maximum uplink duty cycles and the plurality of predefined uplink duty cycles;
selecting a referenced maximum uplink duty cycle from the plurality of maximum uplink duty cycles according to a specific strategy (305); and
scheduling a transmission time of the terminal according to the referenced maximum uplink duty cycle (306); **characterized in that**, wherein, selecting a referenced maximum uplink duty cycle from the plurality of maximum uplink duty cycles comprises:
acquiring a first uplink duty cycle actually scheduled by a first network device for the terminal in a time window;
acquiring a plurality of predefined uplink duty cycles of the first network device;
selecting a target predefined uplink duty cycle from the plurality of predefined uplink duty cycles when the first uplink duty cycle is less than or equal to a maximum value of the plurality of predefined uplink duty cycles; and
determining a maximum uplink duty cycle corresponding to the target predefined uplink duty cycle as the referenced maximum uplink duty cycle.

5. The method of claim 4, further comprising:
acquiring a second uplink duty cycle actually scheduled by the second network device for the terminal in the time window, wherein power back-off or power level back-off is performed when the second uplink duty cycle exceeds the referenced maximum uplink duty cycle.

6. The method of claim 4, wherein the plurality of predefined uplink duty cycles corresponding to the first network device are reported by the terminal.

7. A terminal device, comprising:
a determining module, configured to determine a plurality of maximum uplink duty cycles capable of being scheduled by a second network device according to a plurality of predefined uplink duty cycles corresponding to a first network device, wherein there is a correspondence relation between the plurality of maximum uplink duty cycles and the plurality of predefined uplink duty cycles; and
a reporting module, configured to report the plurality of maximum uplink duty cycles, wherein the plurality of maximum uplink duty cycles are used for the second network device to select, according to a specific strategy, a referenced maximum uplink duty cycle from the plurality of maximum uplink duty cycles when scheduling a transmission time of the terminal; **characterized in that**, the terminal device further comprises a controlling module, configured to:
control the transmission power according to a relationship between the first uplink duty cycle and the plurality of predefined uplink duty cycles; wherein the controlling module is further configured to:
acquire a first uplink duty cycle actually scheduled by a first network device for the terminal in a time window;
determine a relationship between the first uplink duty cycle and a maximum value of the plurality of predefined uplink duty cycles; and
perform power back-off or power level back-off when the first uplink duty cycle is greater than the maximum value;
when the first uplink duty cycle is less than or equal to the maximum value, the controlling module is further configured to:
determine a referenced maximum uplink duty cycle from the plurality of maximum uplink duty cycles according to a specific strategy,
acquire a second uplink duty cycle actually scheduled by the second network device for the terminal in the time window; and
perform power back-off or power level back-off when the second uplink duty cycle exceeds the referenced maximum uplink duty cycle.

8. A network device, comprising:
an acquiring module, configured to acquire a plurality of maximum uplink duty cycles reported by a terminal, wherein the plurality of maximum uplink duty cycles capable of being scheduled by a second network device are determined according to a plurality of predefined uplink duty cycles corresponding to a first network device, wherein there is a correspondence relation between the plurality of maximum uplink duty cycles and the plurality of predefined uplink duty cycles;
a selecting module, configured to select a referenced maximum uplink duty cycle from the plurality of maximum uplink duty cycles according to a specific strategy; and
a scheduling module, configured to schedule a transmission time of the terminal according to the referenced maximum uplink duty cycle; **characterized in that**, wherein, the selecting module is further configured to:
acquire a first uplink duty cycle actually scheduled by a first network device for the terminal in a time window;
acquire a plurality of predefined uplink duty cycles of the first network device;
select a target predefined uplink duty cycle from the plurality of predefined uplink duty cycles when the first uplink duty cycle is less than or equal to a maximum value of the plurality of predefined uplink duty cycles; and
determine a maximum uplink duty cycle corresponding to the target predefined uplink duty cycle as the referenced maximum uplink duty cycle.

9. The network device of claim 8, wherein the plurality of predefined uplink duty cycles corresponding to the first network device are reported by the terminal.

## Patentansprüche

1. Verfahren zur Informationsverarbeitung, das von einem Endgerät durchgeführt wird, umfassend:
gemäß einer Vielzahl von vordefinierten Uplink-Tastverhältnissen, welche einer ersten Netzwerkvorrichtung entsprechen, Bestimmen einer Vielzahl von maximalen Uplink-Tastverhältnissen, die von einer zweiten Netzwerkvorrichtung geplant werden können, wobei eine Entsprechungsbeziehung zwischen der Vielzahl von maximalen Uplink-Tastverhältnissen und der Vielzahl von vordefinierten Uplink-Tastverhältnissen (202, 302, 402) besteht; und
Melden der Vielzahl von maximalen Uplink-Tastverhältnissen, wobei die Vielzahl von maximalen Uplink-Tastverhältnissen für die zweite Netzwerkvorrichtung verwendet wird, um, gemäß einer spezifischen Strategie, ein referenziertes maximales Uplink-Tastverhältnis aus der Vielzahl von maximalen Uplink-Tastverhältnissen auszuwählen, wenn eine Übertragungszeit des Endgeräts (203, 303, 403) geplant wird;
**dadurch gekennzeichnet, dass** das Verfahren ferner umfasst:
Steuern der Übertragungsleistung gemäß einer Beziehung zwischen dem ersten Uplink-Tastverhältnis und der Vielzahl von vordefinierten Uplink-Tastverhältnissen (308); wobei das Steuern der Übertragungsleistung gemäß der Beziehung zwischen dem ersten Uplink-Tastverhältnis und der Vielzahl von vordefinierten Uplink-Tastverhältnissen umfasst:
Beziehen eines ersten Uplink-Tastverhältnisses, das tatsächlich von einer ersten Netzwerkvorrichtung für das Endgerät in einem Zeitfenster (412) geplant ist;
Bestimmen einer Beziehung zwischen dem ersten Uplink-Tastverhältnis und einem Maximalwert der Vielzahl von vordefinierten Uplink-Tastverhältnissen (413); und
Durchführen einer Leistungsrücknahme (Power Back-off) oder Leistungspegelrücknahme (Power Level Back-off), wenn das erste Uplink-Tastverhältnis größer als der Maximalwert (414) ist;
wobei, wenn das erste Uplink-Tastverhältnis kleiner oder gleich dem Maximalwert ist, das Verfahren ferner umfasst:
Bestimmen eines referenzierten maximalen Uplink-Tastverhältnisses aus der Vielzahl von maximalen Uplink-Tastverhältnissen gemäß einer spezifischen Strategie (415),
Beziehen eines zweiten Uplink-Tastverhältnisses, das tatsächlich von der zweiten Netzwerkvorrichtung für das Endgerät in dem Zeitfenster (416) geplant ist; und
Durchführen einer Leistungsrücknahme (Power Back-off) oder Leistungspegelrücknahme (Power Level Back-off), wenn das zweite Uplink-Tastverhältnis das referenzierte maximale Uplink-Tastverhältnis (417) überschreitet.

2. Verfahren nach Anspruch 1, ferner umfassend:
Bestimmen der Vielzahl von vordefinierten Uplink-Tastverhältnissen, welche der ersten Netzwerkvorrichtung (201, 301, 401) entsprechen.

3. Verfahren nach Anspruch 1, wobei ein Uplink-Tastverhältnis einen Prozentsatz von Uplink-Schlitzen in einer Summe von Uplink-Schlitzen und Downlink-Schlitzen in einem Zeitfenster angibt.

4. Verfahren zur Informationsverarbeitung, das auf eine Netzwerkvorrichtung angewendet wird, umfassend:
Beziehen einer Vielzahl von maximalen Uplink-Tastverhältnissen, die von einem Endgerät (304, 404) gemeldet werden, wobei die Vielzahl von maximalen Uplink-Tastverhältnissen, die von einer zweiten Netzwerkvorrichtung geplant werden können, gemäß einer Vielzahl von vordefinierten Uplink-Tastverhältnissen bestimmt werden, welche einer ersten Netzwerkvorrichtung entsprechen, wobei eine Entsprechungsbeziehung zwischen der Vielzahl von maximalen Uplink-Tastverhältnissen und der Vielzahl von vordefinierten Uplink-Tastverhältnissen besteht;
Auswählen eines referenzierten maximalen Uplink-Tastverhältnisses aus der Vielzahl von maximalen Uplink-Tastverhältnissen gemäß einer spezifischen Strategie (305); und
Planen einer Übertragungszeit des Endgeräts gemäß dem referenzierten maximalen Uplink-Tastverhältnis (306);
**dadurch gekennzeichnet, dass** das Auswählen eines referenzierten maximalen Uplink-Tastverhältnisses aus der Vielzahl von maximalen Uplink-Tastverhältnissen umfasst:
Beziehen eines ersten Uplink-Tastverhältnisses, das tatsächlich von einer ersten Netzwerkvorrichtung für das Endgerät in einem Zeitfenster geplant ist;
Beziehen einer Vielzahl von vordefinierten Uplink-Tastverhältnissen der ersten Netzwerkvorrichtung;
Auswählen eines vordefinierten Ziel-Uplink-Tastverhältnisses aus der Vielzahl von vordefinierten Uplink-Tastverhältnissen, wenn das erste Uplink-Tastverhältnis kleiner oder gleich einem Maximalwert der Vielzahl von vordefinierten Uplink-Tastverhältnissen ist; und
Bestimmen eines maximalen Uplink-Tastverhältnisses, welches dem vordefinierten Ziel-Uplink-Tastverhältnis entspricht, als referenziertes maximales Uplink-Tastverhältnis.

5. Verfahren nach Anspruch 4, ferner umfassend:
Beziehen eines zweiten Uplink-Tastverhältnisses, das tatsächlich von der zweiten Netzwerkvorrichtung für das Endgerät in dem Zeitfenster geplant ist, wobei eine Leistungsrücknahme (Power Back-off) oder Leistungspegelrücknahme (Power Level Back-off) durchgeführt wird, wenn das zweite Uplink-Tastverhältnis das referenzierte maximale Uplink-Tastverhältnis überschreitet.

6. Verfahren nach Anspruch 4, wobei die Vielzahl von vordefinierten Uplink-Tastverhältnissen, welche der ersten Netzwerkvorrichtung entsprechen, von dem Endgerät gemeldet wird.

7. Endgerätevorrichtung, umfassend:
ein Bestimmungsmodul, das dafür ausgelegt ist, eine Vielzahl von maximalen Uplink-Tastverhältnissen, die von einer zweiten Netzwerkvorrichtung geplant werden können, gemäß einer Vielzahl von vordefinierten Uplink-Tastverhältnissen zu bestimmen, welche einer ersten Netzwerkvorrichtung entsprechen, wobei eine Entsprechungsbeziehung zwischen der Vielzahl von maximalen Uplink-Tastverhältnissen und der Vielzahl von vordefinierten Uplink-Tastverhältnissen besteht; und
ein Meldemodul, das dafür ausgelegt ist, die Vielzahl von maximalen Uplink-Tastverhältnissen zu melden, wobei die Vielzahl von maximalen Uplink-Tastverhältnissen für die zweite Netzwerkvorrichtung verwendet wird, um, gemäß einer spezifischen Strategie, ein referenziertes maximales Uplink-Tastverhältnis aus der Vielzahl von maximalen Uplink-Tastverhältnissen auszuwählen, wenn eine Übertragungszeit des Endgeräts geplant wird;
**dadurch gekennzeichnet, dass** die Endgerätevorrichtung ferner ein Steuerungsmodul umfasst, das ausgelegt ist zum:
Steuern der Übertragungsleistung gemäß einer Beziehung zwischen dem ersten Uplink-Tastverhältnis und der Vielzahl von vordefinierten Uplink-Tastverhältnissen;
wobei das Steuerungsmodul ferner ausgelegt ist zum:
Beziehen eines ersten Uplink-Tastverhältnisses, das tatsächlich von einer ersten Netzwerkvorrichtung für das Endgerät in einem Zeitfenster geplant ist;
Bestimmen einer Beziehung zwischen dem ersten Uplink-Tastverhältnis und einem Maximalwert der Vielzahl von vordefinierten Uplink-Tastverhältnissen; und
Durchführen einer Leistungsrücknahme (Power Back-off) oder Leistungspegelrücknahme (Power Level Back-off), wenn das erste Uplink-Tastverhältnis größer als der Maximalwert ist;
wobei, wenn das erste Uplink-Tastverhältnis kleiner oder gleich dem Maximalwert ist, ist das Steuerungsmodul ferner ausgelegt ist zum:
Bestimmen eines referenzierten maximalen Uplink-Tastverhältnisses aus der Vielzahl von maximalen Uplink-Tastverhältnissen gemäß einer spezifischen Strategie,
Beziehen eines zweiten Uplink-Tastverhältnisses, das tatsächlich von der zweiten Netzwerkvorrichtung für das Endgerät in dem Zeitfenster geplant ist; und
Durchführen einer Leistungsrücknahme (Power Back-off) oder Leistungspegelrücknahme (Power Level Back-off), wenn das zweite Uplink-Tastverhältnis das referenzierte maximale Uplink-Tastverhältnis überschreitet.

8. Netzwerkvorrichtung, umfassend:
ein Erfassungsmodul, das dafür ausgelegt ist, eine Vielzahl von maximalen Uplink-Tastverhältnissen zu beziehen, die von einem Endgerät gemeldet werden, wobei die Vielzahl von maximalen Uplink-Tastverhältnissen, die von einer zweiten Netzwerkvorrichtung geplant werden können, gemäß einer Vielzahl von vordefinierten Tastverhältnissen, welche einer ersten Netzwerkvorrichtung entsprechen, bestimmt werden, wobei eine Entsprechungsbeziehung zwischen der Vielzahl von maximalen Uplink-Tastverhältnissen und der Vielzahl von vordefinierten Uplink-Tastverhältnissen besteht;
ein Auswahlmodul, das dafür ausgelegt ist, ein referenziertes maximales Uplink-Tastverhältnis gemäß einer spezifischen Strategie aus der Vielzahl von maximalen Uplink-Tastverhältnissen auszuwählen; und
ein Planungsmodul, das dafür ausgelegt ist, eine Übertragungszeit des Endgeräts gemäß dem referenzierten maximalen Uplink-Tastverhältnis zu planen;
**dadurch gekennzeichnet, dass** das Auswahlmodul ferner ausgelegt ist zum:
Beziehen eines ersten Uplink-Tastverhältnisses, das tatsächlich von einer ersten Netzwerkvorrichtung für das Endgerät in einem Zeitfenster geplant ist;
Beziehen einer Vielzahl von vordefinierten Uplink-Tastverhältnissen der ersten Netzwerkvorrichtung;
Auswählen eines vordefinierten Ziel-Uplink-Tastverhältnisses aus der Vielzahl von vordefinierten Uplink-Tastverhältnissen, wenn das erste Uplink-Tastverhältnis kleiner oder gleich einem Maximalwert der Vielzahl von vordefinierten Uplink-Tastverhältnissen ist; und
Bestimmen eines maximalen Uplink-Tastverhältnisses, welches dem vordefinierten Ziel-Uplink-Tastverhältnis entspricht, als referenziertes maximales Uplink-Tastverhältnis.

9. Netzwerkvorrichtung nach Anspruch 8, wobei die Vielzahl von vordefinierten Uplink-Tastverhältnissen, welche der ersten Netzwerkvorrichtung entsprechen, von dem Endgerät gemeldet wird.

## Revendications

1. Procédé de traitement d'informations, mis en œuvre par un terminal, comprenant :
selon une pluralité de rapports cycliques de liaison montante prédéfinis correspondant à un premier dispositif de réseau, la détermination d'une pluralité de rapports cycliques de liaison montante maximum pouvant être planifiés par un second dispositif de réseau, dans lequel il y a une relation de correspondance entre la pluralité de rapports cycliques de liaison montante maximum et la pluralité de rapports cycliques de liaison montante prédéfinis (202, 302, 402) ; et
le signalement de la pluralité de rapports cycliques de liaison montante maximum, dans lequel la pluralité de rapports cycliques de liaison montante maximum sont utilisés pour permettre au second dispositif de réseau de sélectionner, selon une stratégie spécifique, un rapport cyclique de liaison montante maximal référencé parmi la pluralité de rapports cycliques de liaison montante maximum lors de la planification d'un moment de transmission du terminal (203, 303, 403) ;
**caractérisé en ce que** le procédé comprend en outre :
la commande de la puissance de transmission selon une relation entre le premier rapport cyclique de liaison montante et la pluralité de rapports cycliques de liaison montante prédéfinis (308) ; dans lequel la commande de la puissance de transmission selon la relation entre le premier rapport cyclique de liaison montante et la pluralité de rapports cycliques de liaison montante prédéfinis comprend :
l'acquisition d'un premier rapport cyclique de liaison montante réellement planifié par un premier dispositif de réseau pour le terminal dans une fenêtre temporelle (412) ;
la détermination d'une relation entre le premier rapport cyclique de liaison montante et une valeur maximale de la pluralité de rapports cycliques de liaison montante prédéfinis (413) ; et
la réalisation d'une réduction de puissance ou d'une réduction de niveau de puissance lorsque le premier rapport cyclique de liaison montante est supérieur à la valeur maximale (414) ;
lorsque le premier rapport cyclique de liaison montante est inférieur ou égal à la valeur maximale, le procédé comprend en outre :
la détermination d'un rapport cyclique de liaison montante maximal référencé parmi la pluralité de rapports cycliques de liaison montante maximum selon une stratégie spécifique (415),
l'acquisition d'un second rapport cyclique de liaison montante réellement planifié par le second dispositif de réseau pour le terminal dans la fenêtre temporelle (416) ; et
la réalisation d'une réduction de puissance ou d'une réduction de niveau de puissance lorsque le second rapport cyclique de liaison montante dépasse le rapport cyclique de liaison montante maximal référencé (417).

2. Procédé selon la revendication 1, comprenant en outre :
la détermination de la pluralité de rapports cycliques de liaison montante prédéfinis correspondant au premier dispositif de réseau (201, 301, 401).

3. Procédé selon la revendication 1, dans lequel un rapport cyclique de liaison montante indique un pourcentage de créneaux de liaison montante dans une somme de créneaux de liaison montante et de créneaux de liaison descendante dans une fenêtre temporelle.

4. Procédé de traitement d'informations, appliqué à un dispositif de réseau, comprenant :
l'acquisition d'une pluralité de rapports cycliques de liaison montante maximum signalés par un terminal (304, 404), dans lequel la pluralité de rapports cycliques de liaison montante maximum pouvant être planifiés par un second dispositif de réseau sont déterminés selon une pluralité de rapports cycliques de liaison montante prédéfinis correspondant à un premier dispositif de réseau, dans lequel il y a une relation de correspondance entre la pluralité de rapports cycliques de liaison montante maximum et la pluralité de rapports cycliques de liaison montante prédéfinis ;
la sélection d'un rapport cyclique de liaison montante maximal référencé parmi la pluralité de rapports cycliques de liaison montante maximum selon une stratégie spécifique (305) ; et
la planification d'un moment de transmission du terminal selon le rapport cyclique de liaison montante maximal référencé (306) ; **caractérisé en ce que** la sélection d'un rapport cyclique de liaison montante maximal référencé parmi la pluralité de rapports cycliques de liaison montante maximum comprend :
l'acquisition d'un premier rapport cyclique de liaison montante réellement planifié par un premier dispositif de réseau pour le terminal dans une fenêtre temporelle ;
l'acquisition d'une pluralité de rapports cycliques de liaison montante prédéfinis du premier dispositif de réseau ;
la sélection d'un rapport cyclique de liaison montante prédéfini cible parmi la pluralité de rapports cycliques de liaison montante prédéfinis lorsque le premier rapport cyclique de liaison montante est inférieur ou égal à une valeur maximale de la pluralité de rapports cycliques de liaison montante prédéfinis ; et
la détermination d'un rapport cyclique de liaison montante maximal correspondant au rapport cyclique de liaison montante prédéfini cible en tant que rapport cyclique de liaison montante maximal référencé.

5. Procédé selon la revendication 4, comprenant en outre :
l'acquisition d'un second rapport cyclique de liaison montante réellement planifié par le second dispositif de réseau pour le terminal dans la fenêtre temporelle, dans lequel la réduction de puissance ou la réduction de niveau de puissance est réalisée lorsque le second rapport cyclique de liaison montante dépasse le rapport cyclique de liaison montante maximal référencé.

6. Procédé selon la revendication 4, dans lequel la pluralité de rapports cycliques de liaison montante prédéfinis correspondant au premier dispositif de réseau sont signalés par le terminal.

7. Dispositif terminal, comprenant :
un module de détermination, configuré pour déterminer une pluralité de rapports cycliques de liaison montante maximum pouvant être planifiés par un second dispositif de réseau selon une pluralité de rapports cycliques de liaison montante prédéfinis correspondant à un premier dispositif de réseau, dans lequel il y a une relation de correspondance entre la pluralité de rapports cycliques de liaison montante maximum et la pluralité de rapports cycliques de liaison montante prédéfinis ; et
un module de signalement, configuré pour signaler la pluralité de rapports cycliques de liaison montante maximum, dans lequel la pluralité de rapports cycliques de liaison montante maximum sont utilisés pour permettre au second dispositif de réseau de sélectionner, selon une stratégie spécifique, un rapport cyclique de liaison montante maximal référencé parmi la pluralité de rapports cycliques de liaison montante maximum lors de la planification d'un moment de transmission du terminal ; **caractérisé en ce que** le dispositif terminal comprend en outre un module de commande, configuré pour :
commander la puissance de transmission selon une relation entre le premier rapport cyclique de liaison montante et la pluralité de rapports cycliques de liaison montante prédéfinis ; dans lequel le module de commande est en outre configuré pour :
acquérir un premier rapport cyclique de liaison montante réellement planifié par un premier dispositif de réseau pour le terminal dans une fenêtre temporelle ; déterminer une relation entre le premier rapport cyclique de liaison montante et une valeur maximale de la pluralité de rapports cycliques de liaison montante prédéfinis ; et
réaliser une réduction de puissance ou une réduction de niveau de puissance lorsque le premier rapport cyclique de liaison montante est supérieur à la valeur maximale ;
lorsque le premier rapport cyclique de liaison montante est inférieur ou égal à la valeur maximale, le module de commande est en outre configuré pour :
déterminer un rapport cyclique de liaison montante maximal référencé parmi la pluralité de rapports cycliques de liaison montante maximum selon une stratégie spécifique,
acquérir un second rapport cyclique de liaison montante réellement planifié par le second dispositif de réseau pour le terminal dans la fenêtre temporelle ; et
réaliser une réduction de puissance ou une réduction de niveau de puissance lorsque le second rapport cyclique de liaison montante dépasse le rapport cyclique de liaison montante maximal référencé.

8. Dispositif de réseau, comprenant :
un module d'acquisition, configuré pour acquérir une pluralité de rapports cycliques de liaison montante maximum signalés par un terminal, dans lequel la pluralité de rapports cycliques de liaison montante maximum pouvant être planifiés par un second dispositif de réseau sont déterminés selon une pluralité de rapports cycliques de liaison montante prédéfinis correspondant à un premier dispositif de réseau, dans lequel il y a une relation de correspondance entre la pluralité de rapports cycliques de liaison montante maximum et la pluralité de rapports cycliques de liaison montante prédéfinis ;
un module de sélection, configuré pour sélectionner un rapport cyclique de liaison montante maximal référencé parmi la pluralité de rapports cycliques de liaison montante maximum selon une stratégie spécifique ; et
un module de planification, configuré pour planifier un moment de transmission du terminal selon le rapport cyclique de liaison montante maximal référencé ; **caractérisé en ce que** le module de sélection est en outre configuré pour :
acquérir un premier rapport cyclique de liaison montante réellement planifié par un premier dispositif de réseau pour le terminal dans une fenêtre temporelle ;
acquérir une pluralité de rapports cycliques de liaison montante prédéfinis du premier dispositif de réseau ;
sélectionner un rapport cyclique de liaison montante prédéfini cible parmi la pluralité de rapports cycliques de liaison montante prédéfinis lorsque le premier rapport cyclique de liaison montante est inférieur ou égal à une valeur maximale de la pluralité de rapports cycliques de liaison montante prédéfinis ; et
déterminer un rapport cyclique de liaison montante maximal correspondant au rapport cyclique de liaison montante prédéfini cible en tant que rapport cyclique de liaison montante maximal référencé.

9. Dispositif de réseau selon la revendication 8, dans lequel la pluralité de rapports cycliques de liaison montante prédéfinis correspondant au premier dispositif de réseau sont signalés par le terminal.
